(19) Europäisches Patentamt / European Patent Office / Office européen des brevets

(11) **EP 4 761 377 A1**

(12) **EUROPEAN PATENT APPLICATION**
published in accordance with Art. 153(4) EPC

(43) Date of publication:
17.06.2026 Bulletin 2026/25

(21) Application number: 24852390.4

(22) Date of filing: 09.08.2024

(51) International Patent Classification (IPC):
H04W 52/02 (2009.01)        H04W 76/28 (2018.01)
H04W 72/0457 (2023.01)      H04W 72/232 (2023.01)
H04L 5/00 (2006.01)

(52) Cooperative Patent Classification (CPC):
H04L 5/00; H04W 52/02; H04W 72/0457;
H04W 72/232; H04W 76/28; Y02D 30/70

(86) International application number:
PCT/KR2024/011849

(87) International publication number:
WO 2025/034037 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.08.2023  KR 20230104690
04.04.2024  KR 20240046245

(71) Applicant: LG Electronics Inc.
Yeongdeungpo-gu
Seoul 07336 (KR)

(72) Inventors:
• LEE, Sunghoon
  Seoul 06772 (KR)

• LEE, Youngdae
  Seoul 06772 (KR)
• KIM, Jaehyung
  Seoul 06772 (KR)
• YANG, Suckchel
  Seoul 06772 (KR)
• KIM, Seonwook
  Seoul 06772 (KR)
• HWANG, Seunggye
  Seoul 06772 (KR)

(74) Representative: Maikowski & Ninnemann
Patentanwälte Partnerschaft mbB
Postfach 15 09 20
10671 Berlin (DE)

(54) **METHOD AND APPARATUS FOR TRANSMITTING AND RECEIVING SIGNALS IN WIRELESS COMMUNICATION SYSTEM**

(57)     A method for receiving a signal by a terminal in a wireless communication system according to an embodiment of the present disclosure may comprise: receiving, via higher-layer signaling, i) a DRX configuration related to a first type reception operation and ii) a WUS configuration related to a second type reception operation performed at lower power than the first type reception operation; performing the second type reception operation on the basis of the WUS configuration; and performing the first type reception operation on the basis of the DRX configuration and a WUS signal detected as a result of performing the second type reception operation, wherein the DRX configuration includes information on a plurality of candidate time points for the start of a DRX active time, and the terminal performs the first type reception operation at a first DRX active time starting on the basis of a first candidate time point specified on the basis of the detected WUS signal among the plurality of candidate time points.

EP 4 761 377 A1

**(Cont. next page)**

# FIG. 10

1005

Receive DRX configuration and WUS configuration

1010

Perform second type reception operation based on WUS configuration

1015

Perform first type reception operation based on WUS and DRX configuration

**Description**

**TECHNICAL FIELD**

The present disclosure relates to a wireless communication system, and more particularly, to a method and apparatus for transmitting and receiving an uplink/downlink signal.

**BACKGROUND**

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

The power consumption of a user equipment (UE) in radio resource control (RRC) connected mode is dominated by PDCCH monitoring. Since the UE monitors a physical downlink control channel (PDCCH), a longer sleep time may be more effective for power saving of the UE. For power saving of UEs, a discontinuous reception (DRX) operation, a wake-up signal (WUS) for DRX, and PDCCH monitoring adaptation within a DRX active time were introduced in Rel-15/16/17. All these operations were introduced with the aim of reducing the power consumption of a UE by decreasing a time during which the UE monitors a PDCCH and ensuring a longer sleep time.

**DISCLOSURE**

**TECHNICAL PROBLEM**

The present disclosure is intended to provide a method and apparatus for more accurately and efficiently transmitting or receiving signals in a wireless communication system by defining various operations that may be indicated to a user equipment (UE) by a low power wake-up signal (LP-WUS) and performed by the UE in radio resource control (RRC) connected mode.

Other technical objects may be derived from embodiments disclosed in the detailed description.

**TECHNICAL SOLUTION**

According to an aspect of the present disclosure, a method for receiving a signal by a user equipment (UE) in a wireless communication system may include receiving, through higher layer signaling, i) a discontinuous reception (DRX) configuration related to a first type reception operation and ii) a wake-up signal (WUS) configuration related to a second type reception operation performed with lower power than the first type reception operation, performing the second type reception operation based on the WUS configuration, and performing the first type reception operation based on a WUS detected as a result of performing the second type reception operation and the DRX configuration. The DRX configuration may include information about a plurality of candidate time points for starting a DRX active time, and the UE may perform the first type reception operation in a first DRX active time starting based on a first candidate time point specified by the detected WUS among the plurality of candidate time points.

The first candidate time point may be located after a specific time gap from a time when the WUS is detected. For example, the specific time gap may be a transition time required to perform the first type reception operation.

The first type reception operation may include physical downlink control channel (PDCCH) monitoring.

A search space set in which the PDCCH monitoring is to be performed may be determined or switched based on the WUS.

The first type reception operation may include physical downlink shared channel (PDSCH) reception. Rate matching for the PDSCH reception may be performed based on resources configured for the second type reception operation.

The second type reception operation is performed in resources configured UE-commonly.

The WUS may include information about an identifier of the UE.

The WUS configuration may include information about monitoring occasions (MOs) in which the second type reception operation is performed.

The DRX configuration may include information about an interval between the plurality of candidate time points or a periodicity and information about a timer operating during the DRX active time.

The first type reception operation and the second type reception operation may be performed in a radio resource control (RRC) connected state.

According to another aspect of the present disclosure, a non-transitory computer-readable recording medium recording a program for performing the above-described method may be provided.

According to another aspect of the present disclosure, an apparatus for wireless communication may include a memory configured to store instructions, and a processor configured to perform operations by executing the instructions. The operations of the processor may include receiving, through higher layer signaling, i) a DRX configuration related to a first type reception operation and ii) a WUS configuration related to a second type reception operation performed with lower power than the first type reception operation, performing the second type reception operation based on the WUS configuration, and performing the first type reception operation based on a WUS detected as a result of performing the second type reception operation and the DRX configuration. The DRX configuration may include information about a plurality of candidate time points for starting a DRX active time, and the first type reception operation may be performed in a first DRX active time starting based on a first candidate time point specified by the detected WUS among the plurality of candidate time points.

The apparatus may further include a first receiver configured for the first type reception operation, and a second receiver configured for the second type reception operation. The second receiver may consume less power than the first receiver.

The apparatus may be a UE operating in a wireless communication system or a processing device controlling the UE.

According to another aspect of the present disclosure, a method for transmitting a signal by a base station (BS) in a wireless communication system may include transmitting, through higher layer signaling, i) a DRX configuration related to a first type reception operation of a UE and ii) a WUS configuration related to a second type reception operation of the UE performed with lower power than the first type reception operation, transmitting a WUS related to the second type reception operation of the UE based on the WUS configuration, and transmitting a specific signal related to the first type reception operation of the UE based on the WUS and the DRX configuration. The DRX configuration may include information about a plurality of candidate time points for starting a DRX active time, and the specific signal related to the first type reception operation may be transmitted in a first DRX active time starting based on a first candidate time point specified by the WUS among the plurality of candidate time points.

According to another aspect of the present disclosure, a BS for wireless communication may include a memory configured to store instructions, and a processor configured to perform operations by executing the instructions. The operations of the processor may include transmitting, through higher layer signaling, i) a DRX configuration related to a first type reception operation of a UE and ii) a WUS configuration related to a second type reception operation of the UE performed with lower power than the first type reception operation, transmitting a WUS related to the second type reception operation of the UE based on the WUS configuration, and transmitting a specific signal related to the first type reception operation of the UE based on the WUS and the DRX configuration. The DRX configuration may include information about a plurality of candidate time points for starting a DRX active time, and the specific signal related to the first type reception operation may be transmitted in a first DRX active time starting based on a first candidate time point specified by the WUS among the plurality of candidate time points.

## ADVANTAGEOUS EFFECTS

According to an embodiment, signals may be more accurately and more efficiently transmitted or received in a wireless communication system by using low power wake-up signal (LP-WUS) reception to assist an operation of a user equipment (UE) in connected mode.

Other technical effects may be derived from embodiments disclosed in the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates an exemplary physical downlink shared channel (PDSCH) reception and acknowledgement/negative acknowledgement (ACK/NACK) transmission process.
FIG. 3 illustrates an exemplary physical uplink shared channel (PUSCH) transmission process.
FIGS. 4 to 6 are diagrams illustrating a discontinuous reception (DRX) related operation.
FIG. 7 is a diagram illustrating a wake-up signal (WUS).
FIG. 8 is a diagram illustrating the start of a DRX active time according to an embodiment.

FIG. 9 is a diagram illustrating operations of a user equipment (UE) and a network according to an embodiment.

FIG. 10 is a diagram illustrating an operation of a UE according to an embodiment.

FIG. 11 is a diagram illustrating an operation of a base station (BS) according to an embodiment.

FIG. 12 illustrates a flexible network topology to which some examples of the present disclosure are applicable.

FIG. 13 shows an example of a communication system 100 applied to the present disclosure.

FIG. 14 illustrates an example of a wireless device applicable to the present disclosure.

## DETAILED DESCRIPTION

In the present specification, "A or B" may mean "only A", "only B", or "both A and B". In other words, "A or B" in the present specification may be interpreted as "A and/or B". For example, in the present specification, "A, B or C" may refer to "only A", "only B", "only C", or "any combination of A, B, and C".

Slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B " may mean "only A", "only B", or "both A and B". In addition, the expression "at least one of A or B" or "at least one of A and/or B " in the present specification may be interpreted the same as "at least one of A and B.

In addition, "at least one of A, B and C" in the present specification may refer to "only A", "only B", or "any combination of A, B and C". In addition, " at least one of A, B or C" or "at least one of A, B and/or C " may mean "at least one of A, B and C.

Moreover, parentheses used in the present disclosure may mean "for example." Specifically, when "control information (ABC)" is described, "ABC" may be given as an example of "control information." For example, "control information" may also include DEF as another example. In other words, "control information" in the present disclosure is not limited to "ABC,", which may be described as an example of "control information." Further, when "control information (i.e., ABC)" is described, "ABC" may also be given as an example of "control information."

Further, terms such as "first" and "second" in the present disclosure are used solely to distinguish one component from another and are not used to limit the components. Unless specifically limited, they do not restrict the order or importance of components. Therefore, a first component in one embodiment of the present disclosure may be referred to as a second component in another embodiment, and similarly, a second component in one embodiment may be referred to as a first component in another embodiment.

In the following description, 'when, if, in case of may be replaced with 'based on'.

Technical features described individually in one drawing in the present specification may be implemented individually or simultaneously.

In the present disclosure, a terminal is a user equipment (UE) or a consumer-side device, and may also be referred to as a first node that receives/transmits a signal from/to a base station (BS)/second node/IAB node/transmission-reception point (TRP). The terminal may correspond to a physical node or a logical node. The terminal may correspond to a user-side endpoint or an intermediate point between other endpoints. In communication (including one-to-one, many-to-one, one-to-many, and many-to-many communication) between two points which are not limited to endpoints, the terminal may be a served node. The terminal may be a fixed node or a mobile (unfixed) node in terms of location.

In the present disclosure, a BS is a network-side device and may also be referred to as a second node/IAB node/x-NodeB (where x may be an abbreviation related to radio access technology (RAT))/TRP. The BS may be a physical node or a logical node. The BS may be a network-side endpoint or an intermediate point between other endpoints. In communication (including one-to-one, many-to-one, one-to-many, and many-to-many communication) between two points which are not limited to endpoints, the BS may be a serving node. The BS may be a fixed node or an unfixed node in terms of location.

In the present disclosure, a higher layer parameter may be a parameter that is configured for a UE, pre-configured, or pre-defined. For example, a BS or network may transmit a higher layer parameter to a UE. The higher layer parameter may be transmitted via RRC (Radio Resource Control) signaling or MAC (Medium Access Control) signaling.

In the present disclosure, "configured or defined" may be interpreted as being configured or pre-configured for a device through predefined signaling (e.g., SIB, MAC, RRC) from a BS or network or as being preconfigured for the device. In the present disclosure, "configured or defined" may be interpreted as being preconfigured for the device.

The technologies proposed in the present disclosure may be used in various wireless communication systems such as CDMA (Code Division Multiple Access), FDMA (Frequency Division Multiple Access), TDMA (Time Division Multiple Access), OFDMA (Orthogonal Frequency Division Multiple Access), and SC-FDMA (Single Carrier Frequency Division Multiple Access). CDMA may be implemented as wireless technologies like UTRA (Universal Terrestrial Radio Access) or CDMA2000. TDMA may be implemented as wireless technologies like GSM (Global System for Mobile Communications)/GPRS (General Packet Radio Service)/EDGE (Enhanced Data Rates for GSM Evolution). OFDMA may be implemented as wireless technologies like IEEE (Institute of Electrical and Electronics Engineers) 802.11 (Wi-Fi), IEEE 802.16 (WiMAX), IEEE 802-20, E-UTRA (Evolved UTRA), LTE (Long Term Evolution), and 5G NR.

The technologies proposed in the present disclosure may be implemented as 6G wireless technology and applied to various 6G systems. For example, 6G systems may have key factors such as eMBB (enhanced Mobile Broadband), URLLC (Ultra-Reliable Low Latency Communications), mMTC (massive Machine-Type Communication), AI (Artificial Intelligence) integrated communication, tactile internet, high throughput, high network capacity, high energy efficiency, low backhaul and access network congestion, and enhanced data security.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation

- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission
- LP-WUS: Low Power Wake-Up Signal
- XR: Abbreviation for eXtended Reality. VR(virtual reality), AR(augmented reality), MR(mixed reality)
- RRM : Radio Resource Management

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

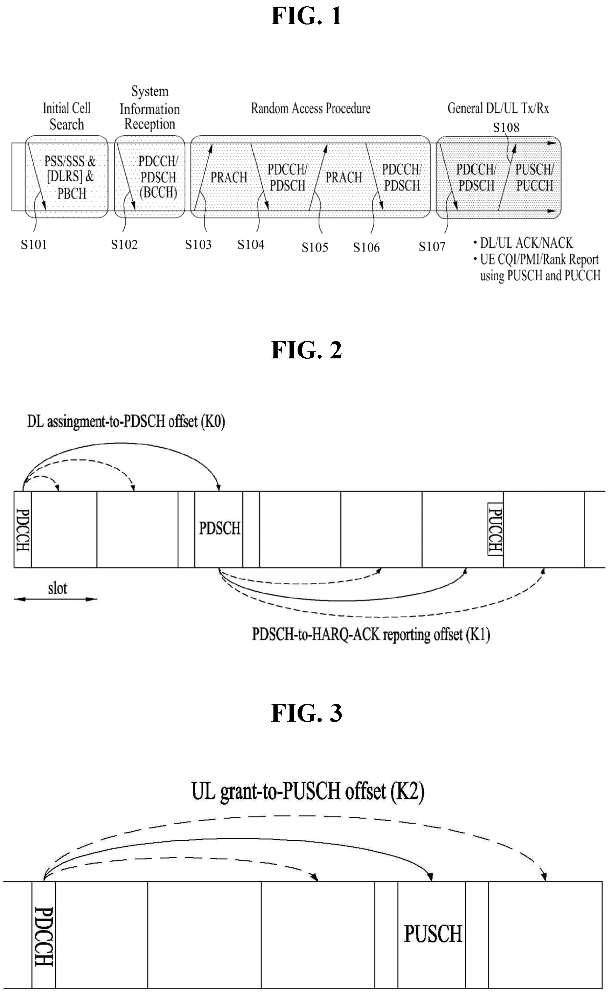

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 2 illustrates an exemplary PDSCH reception and ACK/NACK transmission process. Referring to FIG. 2, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1.

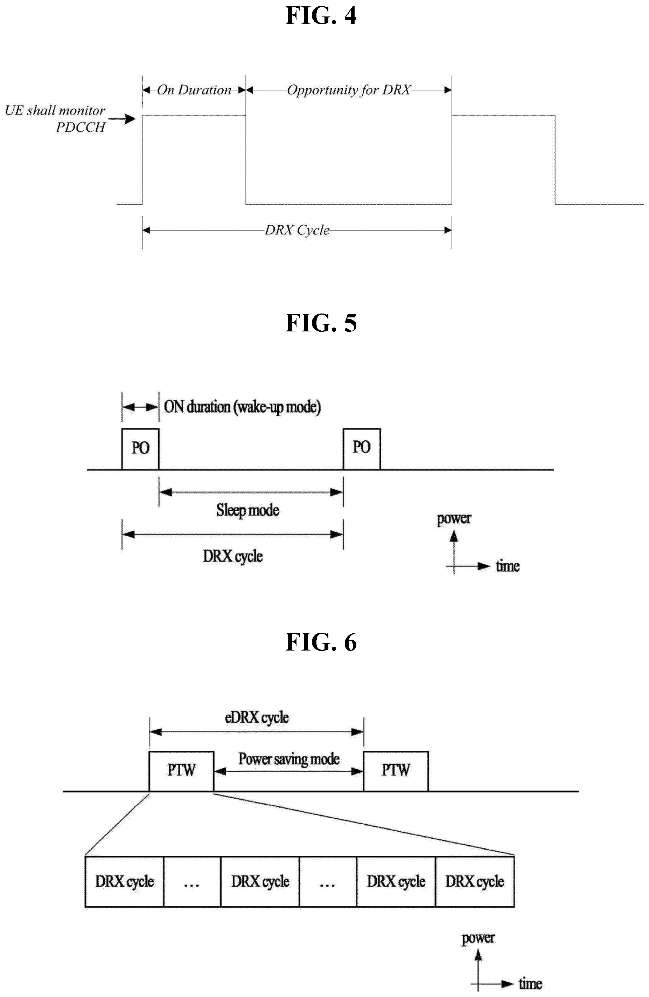

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

FIG. 3 illustrates an exemplary PUSCH transmission procedure. Referring to FIG. 3, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(\text{SFN} + \text{PF\_offset}) \bmod T = (T \text{ div } N)*(\text{UE\_ID} \bmod N)$$

- An index i_s indicating the index of the PO is determined by:

$$i\_s = \text{floor}(\text{UE\_ID}/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 4 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 4, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

(2) RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.
Therefore, if DRX is configured, PDCCH monitoring/reception may be performed discontinuously in the time domain in performing the above-described/proposed procedures and/or methods are performed.
FIG. 5 illustrates an exemplary DRX cycle for paging.
Referring to FIG. 5, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.
In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.
FIG. 6 illustrates an extended DRX (eDRX) cycle.
According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 5 may be included in the PTW duration. The number of DRX cycles in the PTW duration may be set by the BS through a higher layer (e.g., RRC) signal.

**WUS (Wake-up signal)/PEI (Paging Early Indication)**

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

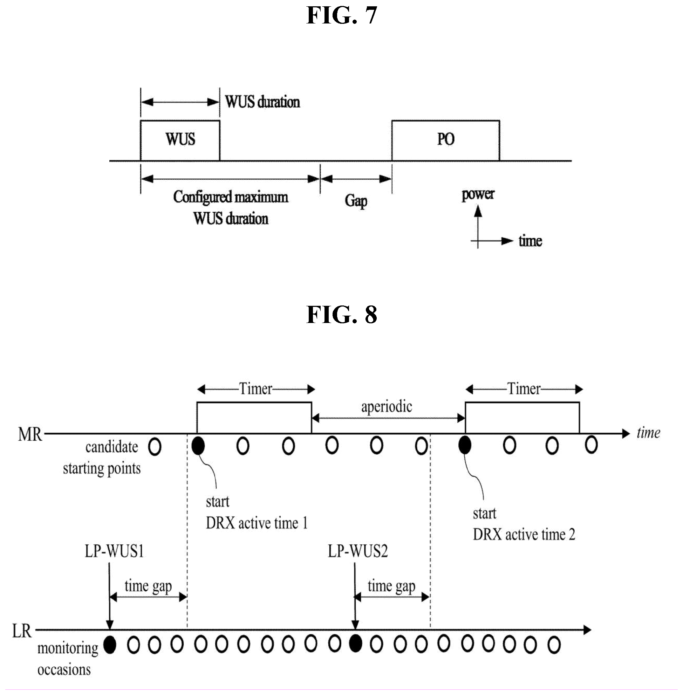

FIG. 7 is a diagram illustrating a WUS in an LTE system. Referring to FIG. 7, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

## LP-WUR and LP-WUS

In the present disclosure, main radio will be referred to as MR and a low-power wake-up receiver will be referred to as LP-WUR or LR, according to the terminology used in LP-WUS-related standardization discussions.

- MR refers to a general receiver for signal reception in an NR UE, and the MR may be used to receive an NR OFDM signal. That is, a receiver of a UE in the current NR standard may be understood as an MR.
- LP-WUR refers to a receiver that may be newly added to a UE to receive a low-power signal. Newly designed low-power signals such as an LP-WUS or a low power synchronization signal (LP-SS) may be received through the LP-WUR. The LP-WUR may have characteristics of lower cost and lower power consumption, compared to the MR.

Specifically, according to the current NR standard, a UE should periodically wake up every N DRX cycles (where N may be 1), which accounts for a significant portion of power consumption in a period during which there is no signal or information transmission. When the MR of the UE is capable of waking up only when it is triggered (e.g., to perform a paging operation), the power consumption of the UE may be significantly reduced. To this end, an LP-WUS may be used to trigger the MR, and the LP-WUS may be received by introducing a separate receiver, the LR, which may operate with ultra-low power consumption.

LR signals such as the LP-WUS or LP-SS may be configured/transmitted differently from MR signals in the time/frequency domain. For example, LR signals such as the LP-WUS/LP-SS may be modulated with on-off keying OOK. OOK-modulated LR signals are aligned to the boundaries of time resources (e.g., slots or symbols in the time domain), but may be transmitted without alignment to the boundaries of frequency resources (e.g., REs or subcarriers in the frequency domain). For example, the LP-WUS may be configured to represent the presence or absence (1/0) of a signal within a specific time duration, and the UE may receive the LP-WUS only through energy detection (or envelope detection) of the LP-WUS within the specific time duration.

The OOK symbol of the LP-WUS may be overlaid with i) a sequence for spectrum flattening, ii) an OFDM sequence for increasing transmission coverage, and/or iii) an OFDM sequence for additional information transmission. In the case of ii)/iii), the LR signal may be an OOK sequence detectable through envelope detection, and ON symbols of the sequence may consist of OFDM-modulated symbols. Particularly, in the case of iii), if OFDM demodulation is possible for the OFDM overlaid OOK sequence, additional meaningful information bits may be obtained.

The LR signal may be either a general OOK signal (without overlaid OFDM) or an OFDM overlaid OOK signal. The LP-WUR of the UE may be defined as two types.

- LP-WUR Type #1: A wake-up receiver capable of energy detection only
- LP-WUR Type #2: A wake-up receiver capable of OFDM sequence detection

LP-WUR Type #1 is a wake-up receiver configured with low cost, which is only capable of determining the presence or absence of a signal (e.g., energy detection or envelope detection). Therefore, it is a receiver capable of detecting only an OOK signal (e.g., a general OOK signal or an OOK signal part excluding overlaid OFDM in an OFDM overlaid OOK signal).

LP-WUR Type #2 is a wake-up receiver with a higher cost than Type #1, which is capable of detecting an OFDM sequence and energy detection as well. Therefore, it is a receiver capable of detecting/decoding not only a general OOK signal without overlaid OFDM, but also an OFDM overlaid OOK signal. Further, it may also be configured to be capable of receiving the PSS/SSS of a legacy NR signal.

## Configuration of LP-WUS payload and behavior of connected mode UE

The power consumption of a UE in RRC connected mode is dominated by PDCCH monitoring. Since the UE uses an MR to monitor a PDCCH, a longer sleep time of the MR may be more effective for power saving of the UE. To save power for UEs, technologies such as a DRX operation, a WUS for DRX, and PDCCH monitoring adaptation within a DRX active time were introduced in Rel-15/16/17. All these operations were introduced with the aim of reducing the power consumption of a UE by decreasing a time during which the UE monitors a PDCCH and ensuring a longer sleep time.

A method for reducing the number of times a UE performs PDCCH monitoring by using an LR discussed in Rel-18 may be considered. The LR of the UE may operate with relatively very low power consumption, making the reception of the LP-WUS less burdensome. Therefore, when the UE in RRC connected mode is capable of performing operations such as waking up the MR or temporarily transitioning the MR to a sleep state (e.g., micro-sleep) based on an indication of the LP-WUS, the sleep time of the MR may be kept long, which may be effective for power saving of the UE.

More diverse operations may be indicated to the UE by the LP-WUS and performed by the UE in RRC connected mode than in RRC idle/inactive mode, and the operations may not be limited to maintaining the sleep state. The LP-WUS is received through the LR, separately from an operation of the MR of the UE. Considering this assistance from the LP-WUS, existing RRC connected mode operations, such as BWP change, cell activation, connected mode DRX (C-DRX), and semi-persistent scheduling (SPS), need to be newly defined/introduced. Further, information included in the LP-WUS received by the UE for these operations may also need to be configured differently.

The present disclosure proposes operations of a UE that receives an LP-WUS in RRC connected mode. As a UE supporting LP-WUS reception, that is, a UE equipped with an LR receives the LP-WUS, existing RRC connected mode operations need to be configured/introduced differently. This allows the existing connected mode operations to be further enhanced through the assistance of the LP-WUS. For example, the UE in the RRC connected mode may receive a signal in a specific BWP using the MR, in parallel with receiving the LP-WUS through the LR. A UE operation is proposed, in which an operation of an MR changes based on an auxiliary indication of an LP-WUS which is received through an LR during signal reception through the MR.

Further, a method for configuring the payload of an LP-WUS that may be received by a connected-mode UE is proposed. Depending on an operation intended to be indicated to the UE by the LP-WUS, the payload may have a size equal to or different from that of an LP-WUS in the idle/inactive mode, and also include information the same as or different from that of the LP-WUS in the idle/inactive mode.

Additionally, a method is proposed, in which a UE having prior knowledge of time/frequency resources in which an LP-WUS may be transmitted rate-matches other signals/information to be received, based on the location of those LP-WUS resources.

Further, methods for enhancing existing connected mode operations performed by a UE through the assistance of an LP-WUS are proposed.

The operations proposed in the present disclosure are useful for reducing the power consumption of a UE and may help existing operations to be more flexible or smooth.

Although the following description is given in the context of an NR system as an example, the proposed methods are not specifically limited to NR transmission/reception. The proposed methods are also applicable to, for example, any DRX, multi-cell, activation/deactivation, dormancy, SPS, and so on. The proposed methods may be applied to all wireless communication transmission/reception structures and services.

The distinctions between the schemes or options in the following description are made for clarity and should not be restrictively interpreted to mean that each should be implemented independently. For example, the schemes/options described below may be implemented individually, but at least some of them may also be implemented in a combination, unless conflicting with each other.

## [Proposal 1] Method for configuring LP-WUS payload that RRC connected-mode UE may receive, and operation after LP-WUS reception

The LP-WUS may be received through the LR, separately from the MR of the UE and used in both the idle/inactive mode and the connected mode. The discussion around introducing the LP-WUS is primarily for the purpose of power saving, and power saving during a paging procedure and RRM measurement in the idle/inactive mode may have the highest priority. Therefore, it may be considered that the payload of an LP-WUS received in the connected mode is configured depending on the configuration of the payload of an LP-WUS in the idle/inactive mode, or separately. Further, it may be considered that the payload is configured based on time/frequency resources in which the LP-WUS may be transmitted.

The payload of an LP-WUS that may be received by an RRC connected-mode UE may be configured differently from the payload of an LP-WUS that may be received by an RRC idle/inactive-mode UE. This may be caused by an operation performed by the UE upon receiving the LP-WUS in the connected mode being different from an operation performed upon receiving the LP-WUS in the idle/inactive mode.

The payload of the LP-WUS that may be received by the RRC connected-mode UE may be configured to include a C-RNTI, similar to a PDCCH that may be received by the MR. The C-RNTI serves to identify whether the PDCCH matches the C-RNTI of the UE during blind detection of the PDCCH. Similar to the PDCCH, the C-RNTI in the LP-WUS may be used to identify whether the received LP-WUS is transmitted for that specific UE. When an ID that may identify the UE is included in the LP-WUS payload in this manner, the LP-WUS may be transmitted in shared resources commonly received by multiple UEs. In other words, RRC connected-mode UEs may receive the LP-WUS in their shared time/frequency resources, and after receiving the LP-WUS, they may check the C-RNTI of the LP-WUS to identify a target UE of the LP-WUS. This may be similar to the blind detection mechanism of the PDCCH, and since multiple UEs receive the LP-WUS within limited time/frequency resources, a BS may avoid wasting resources of an entire cell, potentially resulting in benefits such as improved scheduling efficiency. Therefore, common resources among UEs may be utilized, and the payload may include a large amount of information.

As another method, it may be considered that the LP-WUS is transmitted in time/frequency resources that are distinguished between UEs, and the payload includes a small amount of information. For example, UEs are grouped into a specific group (or subgroup), and the UEs belonging to the group (or subgroup) share time/frequency resources to receive the LP-WUS. Subsequently, a target UE of the LP-WUS may be identified by an index in information of the payload of the LP-WUS, which may identify the UE within the group (or subgroup). This may be similar to an operation of indicating to a UE on a subgroup basis by a paging early indication (PEI) whether it should wake up at a next paging occasion (PO) to receive a paging, in the current standards. Because the UE should receive an LP-WUS with a relatively small amount of information in its payload, its reception performance is good, and because time/frequency resources that the UE should monitor are already distinguished, there may be an advantage of a low false alarm rate. Therefore, dedicated resources distinguished among UEs may be utilized, and the payload may include a small amount of information.

Only one of these payload configuration methods may be supported, or they may be separately configured/indicated to the UE through a higher layer parameter.

For each operation, an additional indication through DCI may be configured after LP-WUS reception. This may involve performing an additional procedure through the DCI, besides information included in the LP-WUS payload. For example, the DCI may be for handling a false alarm case. When the LP-WUS is transmitted in resources distinguished among UEs, a false alarm may occur for UEs belonging to a corresponding group (or subgroup), and they may receive an indication through the DCI to minimize false alarms. When an RRC connected mode-UE receives the LP-WUS, the MR of the UE may be already awake or wake up after the LP-WUS reception, and thus receive a PDCCH. When receiving an indication through the DCI, the UE may be identified as the target of the LP-WUS in a double-checking manner. When the UE wakes up upon receiving the LP-WUS but receives no DCI for a specific period (e.g., the time of a specific timer), the UE may consider that it is not the target of the LP-WUS, that is, a false alarm has occurred. In this regard, a timer, for example, an LP-WUS inactivity timer may be introduced. Alternatively, when a skipping (or sleeping) indication is transmitted through DCI to UEs that are not the target of the LP-WUS but share limited time/frequency resources, UEs experiencing a false alarm may turn off their MRs again to save power consumption. This operation may be applied equally to UEs configured with C-DRX. In such a case, the timer may be a newly introduced timer, or a drx-onDurationTimer may be configured to play a similar role. For this purpose, the drx-onDurationTimer may be set to a very short time. For example, the UE may not start a subsequent DRX operation, when it receives the LP-WUS and receives no DCI during a specific period (e.g., the LP-WUS inactivity timer). An example of the received DCI may be DCI format 2_6 (PEI).

Alternatively, the target of the LP-WUS may be determined based on whether a subsequent operation is configured/indicated to the UE that has received the LP-WUS. For example, in the case where the LP-WUS is received in common resources, when the UE receives the LP-WUS but there is no start of a configured DRX within a specific time, the UE may determine that it is not the target of the LP-WUS and ignore the received LP-WUS.

[Proposal 2] Method for performing rate-matching for LP-WUS transmission resources known to UE

Since time/frequency resources in which the LP-WUS received by the LR is transmittable may not be used for MR data transmission, a rate-matching method for these LP-WUS resources is proposed.

In the case of a UE supporting the Rel-18 LP-WUS, it may assume that PDSCH reception is not possible in time/frequency resources in which an LP-WUS for another UE (group in the cell) or an LP-SS (a synchronization signal for LP-WUS reception) for the entire cell or a UE group is transmittable, even without a separate configuration/indication. This may be a result based on the assumption that, based on configured information regarding LP-WUS support in a camping cell, a signal for the LR is already known to be transmitted in corresponding time/frequency resources, and consequently, information receivable by the MR will not be transmitted.

For an NR legacy UE before Rel-18 where LP-WUS is introduced, these resources may be configured/indicated by a rate-matching pattern. Table 1 illustrates a rate-matching pattern configuration excerpted from the current standard document TS38.331.

[Table 1]

| RateMatchPattern ::= | SEQUENCE { |
| --- | --- |

```
    rateMatchPatternId          RateMatchPatternId,

    patternType                 CHOICE {
      bitmaps                   SEQUENCE {
        resourceBlocks          BIT STRING (SIZE (275)),
        symbolsInResourceBlock      CHOICE {
          oneSlot               BIT STRING (SIZE (14)),
          twoSlots              BIT STRING (SIZE (28))
        },
        periodicityAndPattern       CHOICE {
          n2                    BIT STRING (SIZE (2)),
          n4                    BIT STRING (SIZE (4)),
          n5                    BIT STRING (SIZE (5)),
          n8                    BIT STRING (SIZE (8)),
          n10                   BIT STRING (SIZE (10)),
          n20                   BIT STRING (SIZE (20)),
          n40                   BIT STRING (SIZE (40))
        }                                           OPTIONAL,  --
Need S

        ...
```

As noted from Table 1, RateMatchPattern may be configured with symbols within 2 slots. Accordingly, depending on the temporal length of a LP-WUS transmission, it may be configured by a rate-matching pattern or it may need to be processed by collision handling. For example, when the LP-WUS or the LP-SS is a consecutive transmission within 2 slots, the RateMatchPattern may be configured for the UE based on this, enabling the UE to know that a PDSCH may not be received in the corresponding resources by the MR. However, when the LP-WUS or the LP-SS is configured to exceed 2 slots, it may not be covered by the rate-matching pattern, and the BS may be required to process this as a signal collision. For example, the RateMatchPattern may be configured to include all resources in which the LP-WUS or the LP-SS may be transmitted. Alternatively, the BS may be configured/set to perform scheduling for an NR legacy UE such that the UE receives a PDSCH by avoiding the resources in which the LP-WUS or the LP-SS may be transmitted.

**[Proposal 3] LP-WUS reception and subsequent operation of RRC connected-mode UE configured with DRX**

A method for receiving an LP-WUS by an RRC connected mode-UE configured with DRX may follow Proposal 1. When such a C-DRX configured UE receives the LP-WUS, operations that it may perform based on the LP-WUS may include an operation defined for the existing WUS. The WUS may be configured/indicated in various forms. For example, the LP-WUS may be used as a WUS for C-DRX of the UE. The MR of the UE may be in deep sleep or light sleep during a period other than a C-DRX active time. Table 2 illustrates details on deep/light sleep excerpted from TR38.840.

[Table 2]

|  | Additional transition energy: (Relative power x ms) | Total transition time |
|---|---|---|
| Deep sleep | 450 | 20 ms |
| Light sleep | 100 | 6 ms |
| Micro sleep | 0 | 0 ms |

As such, the LP-WUS may be a WUS that may indicate whether to start a corresponding DRX according to a C-DRX cycle.
Alternatively, the LP-WUS may be received within a DRX active time. This may be for the purpose of adjusting PDCCH monitoring by separately receiving the LP-WUS through the LR, while the UE does not perform or performs PDCCH monitoring at a reduced frequency within a DRX active time according to a PDCCH skipping or SS set group (SSSG) switching indication.
In another example of an indication, the LP-WUS may instruct the UE to monitor only specific SS set(s). In this case, the LP-WUS may correspond to both a WUS for C-DRX and/or a WUS received within a DRX active time. When the LP-WUS is configured to instruct monitoring of only specific SS set(s) as a WUS for C-DRX, the UE may expect that the drx-onDurationTimer is always started in a corresponding DRX cycle and the monitored SS set(s) varies depending on whether the LP-WUS is received. For example, SS sets that the UE starts monitoring along with starting of the drx-onDurationTimer are preconfigured, and the UE always performs monitoring upon starting DRX, regardless of the reception of the LP-WUS. When the UE receives the LP-WUS before the current DRX cycle, the UE may monitor an SS set of an additionally set index in addition to the SS set(s) configured to be always monitored. The index of the SS set(s) configured to be monitored through LP-WUS reception may be preset through a higher-layer parameter.
Alternatively, this indication may be provided through an LP-WUS received within a DRX active time. The SS set(s) of the preset index may be configured to be monitored by the UE during the DRX active time after receiving the LP-WUS, regardless of whether the UE is currently not monitoring a PDCCH due to PDCCH skipping. This operation may amount to instructing a UE that is currently not monitoring a PDCCH to monitor the PDCCH, or instructing it to monitor SS set(s) of an index that it is currently not monitoring.

**[Proposal 4] Configuration of BWP in which LP-WUS is received**

The RRC connected-mode UE may receive information in a specific BWP (e.g., a default BWP or an active BWP) by the MR, in parallel with receiving the LP-WUS by the LR. In this case, a BWP in which the LR receives the LP-WUS may or may not be the same as the BWP of the MR. That is, the BWP of the LR may be determined dependently on or independently of the BWP of the MR.

[Proposal 4-1] Configuration of BWP of LR

The BWP of the LR may be determined dependently on or independently of the BWP of the MR. When the BWP of the LR is configured dependently on the BWP of the MR, it may be considered that the BWP of the LR is located within the BWP of the MR because the former is generally smaller than the latter. In this case, since the BWP of the LR is dependent on the BWP of the MR, when the BWP of the MR changes (BWP switching), the BWP of the LR may also change accordingly.
The MR of the UE operates in the default BWP or switches to the active BWP. When the MR switches from the default BWP to the active BWP, a BWP inactivity timer starts operating, and upon its expiration, the MR returns to the default BWP. When the BWP of the LR at the UE is dependent on the BWP of the MR, the LR may also operate considering the BWP inactivity timer.

When the MR of the UE operates in the default BWP and the LR of the UE operates, the LR may operate in a BWP configured for reception at the LR within the default BWP. For example, when the default BWP is 20MHz, a 5-MHz LR BWP may be configured at a location within that 20MHz. In this case, an MR operation may include a state where power saving is expected because the MR is in the sleep state and is not monitoring a PDCCH.

When the MR switches to another BWP while the LR is operating, the LR also switches its BWP. In this case, the BWP of the LR may be located within the BWP of the MR, as described above.

Subsequently, when the MR of the UE switches from the active BWP to the default BWP due to the expiration of the BWP inactivity timer, LR operations of the UE may be defined in the following two cases.

1) Return to default BWP and LR operation

Since the LR is dependent on the BWP operation of the MR, when the MR returns to the default BWP, the LR may perform BWP switching identically. In other words, in this case, the BWP inactivity timer may be commonly applied to both the MR and LR of the UE.

2) LR deactivation

If the MR of the UE is instructed to switch to the active BWP, this is for the purpose of receiving information in the BWP, and the subsequent expiration of the BWP inactivity timer without being reset and returning to the default BWP may mean that information reception in the active BWP has been completed. Therefore, the MR of the UE may return to the default BWP and perform an operation for power saving, and the LR may be deactivated until it is activated again.

In another method, the BWP of the LR may be configured and operate independently of the BWP of the MR. For this purpose, a separate BWP for the LR may be configured for the UE, or it may be configured as one of the BWPs of the MR. For example, the LR may always operate within an initial BWP of the UE. In this case, the LR does not require separate RF retuning and may operate regardless of whether the UE is in the idle/inactive mode or the connected mode. Further, it may be expected that when the UE is in the idle/inactive mode, a paging procedure is performed in that BWP, and operating within the same BWP may be an advantage. That is, when the BWP of the LR is configured independently of the BWP of the MR, advantages in terms of complexity/cost may be expected due to factors such as not requiring frequent RF retuning.

[Proposal 4-2] Timer related to LR and MR BWP operations and corresponding UE operation

An operation based on a new timer may be considered in relation to the BWP of the LR. For example, a timer that configures a BWP operation of the LR is named an LR inactivity timer in the present disclosure.

The UE operates in the active BWP or the default BWP by using the MR. This may be an operation related to information reception in general connected mode. The UE may switch to the sleep state and operate only with the LR based on a condition (e.g., C-DRX). In this case, as described in Proposal 3-1, the BWP of the LR may be the same as or different from the BWP (e.g., the active BWP) in which the MR operates. The BWP of the LR may be the active BWP, a preconfigured LR-specific BWP, or the initial BWP.

When the UE starts operating with the LR, it starts the LR inactivity timer. The LR inactivity timer may be a timer that continues while the connected-mode UE operates with the LR. Therefore, upon the expiration of the LR inactivity timer, the LR may stop operating. When the LR inactivity timer expires and the MR is in the sleep state, the MR may be configured to restart operating upon the expiration of the timer. This may be for preventing a situation where the LR operation of the UE is stopped and the MR still does not operate, that is, a situation where neither the LR nor the MR operates. The LR inactivity timer may be configured/indicated by a higher-layer parameter, and when the UE receives the LP-WUS through the LR, the timer may be reset.

Therefore, the UE may always need to be in one of three states: 1) MR operation only, 2) LR operation only, or 3) both MR and LR operation.

An operation based on the LP-WUS may be additionally defined as a reset condition for the BWP inactivity timer of the MR. When the UE is operating in the active BWP and the BWP inactivity timer is running, the BWP inactivity timer may be configured to be reset, upon detection of the LP-WUS by the LR. This operation may be based on the expectation that if the MR of the UE is currently operating and the LP-WUS is detected by the LR, the BS will subsequently schedule information for the UE.

When the LP-WUS is detected by the LR and the MR of the UE is in the deep sleep state, the operation of resetting the BWP inactivity timer may be configured more specifically. In the case where when the LP-WUS is detected by the LR, the MR is in the deep sleep state and the expiration time of the BWP inactivity timer is less than a specific value (e.g., 20ms, the transition time of the MR from the deep sleep state), the BWP inactivity timer may not be reset. This allows the MR of the UE to return to and operate in the default BWP because the BWP inactivity timer expires due to the transition time, even if the MR is instructed to wake up and resume operation by the LP-WUS.

Alternatively, even if when the LP-WUS is detected by the LR, the MR is in the deep sleep state and the expiration time of the BWP inactivity timer is less than the specific value (e.g., 20ms, the transition time of the MR from the deep sleep state), the BWP inactivity timer may be reset. This is because receiving the LP-WUS by the UE means that the BS has information to schedule for the UE, and the LP-WUS is a direct transmission of a wake-up indication to wake up the MR. Therefore, the UE may reset the BWP inactivity timer and operate to receive the information by using the MR in the currently operating BWP.

**[Proposal 5] LP-WUS monitoring occasion**

A monitoring occasion (MO) in which the LP-WUS is expected to be transmitted may be configured for the UE to receive the LP-WUS. The UE may expect the LP-WUS to be transmitted at a specific time point which is configured periodically or aperiodically and known commonly to the UE and the BS, and perform monitoring with the LR.

MOs of the LP-WUS may be configured periodically to indicate a dynamic DRX active time in addition to a periodic C-DRX configuration for the UE. The LP-WUS MOs may be configured for the UE according to a specific periodicity and offset and symbol positions within a slot. Accordingly, when the UE is in a state where it may operate with the LR and monitor the LP-WUS, it expects the LP-WUS to be received at an MO. Upon detection of the LP-WUS, the UE may activate the MR and perform a PDCCH monitoring operation. The MR may require a specific application delay or wake-up delay depending on the current sleep state. This may be set according to the UE or may be a predefined value. For example, it may be a value based on a minimum time gap for the MR to wake up after receiving DCI format 2_6 based on the standard. A time period during which the UE operates with the LR may not be a DRX active time, and this operation may trigger dynamic DRX separate from periodically configured C-DRX.

For the starting point of a DRX active time, periodic time points may be set, rather than an unrestricted form. These may be considered candidate starting points for starting the DRX active time. Since the time points are indicated/configured to be known to both the UE and the BS, there may be an advantage that the BS may accurately know the time point when the UE starts the DRX active time.

The UE may start the DRX active time at a closest candidate time point after a time gap during which the MR wakes up and thus PDCCH monitoring is possible from a time when the LP-WUS is received. The UE may start a timer (e.g., drx-onDurationTimer or drx-inactivityTimer) to start the DRX active time. A subsequent operation follows the configured DRX, and upon expiration of the timer, the DRX operation may be terminated.

FIG. 8 is a diagram illustrating the start of a DRX active time according to an embodiment.

Referring to FIG. 8, the UE may receive information about candidate starting points for a DRX active time and information about a timer (e.g., drx-onDurationTimer or drx-inactivity Timer) through a DRX configuration. For example, the candidate starting points of the DRX active time may be configured periodically, and in this case, the DRX configuration may include information about the periodicity of the candidate starting points.

The UE may receive information about MOs where LP-WUS monitoring is to be performed, through a WUS configuration. The UE monitors an LP-WUS at an MO. The UE may detect LP-WUS 1, and after a time gap (e.g., a transition time required for MR wake-up), start DRX active time 1 at a time point closest to LP-WUS 1 among the candidate starting points of the DRX active time. The started DRX active time 1 may be terminated after the timer.

Subsequently, the UE may detect LP-WUS 2, and after the time gap (e.g., the transition time required for MR wake-up), start DRX active time 2 at a time point closest to LP-WUS 2 among the candidate starting points of the DRX active time. The started DRX active time 2 may be terminated after the timer.

In this manner, the start of the DRX active time may be dynamically indicated, and the interval between DRX active times may vary depending on an LP-WUS detection situation, rather than being set according to a predefined periodicity.

In the case of the proposed dynamic DRX, the same preset timer values for periodic C-DRX may be used, or separate values may be set. When the same preset C-DRX timer values are used, there may be an advantage on the BS side that alignment with a UE operation is easy, regardless of whether the UE starts periodic DRX or starts dynamic DRX triggered by the LP-WUS. When the separately set values are used, there may be an advantage that a more configurable operation may be defined through timer values dependent on a UE operation.

The effect of indirectly configuring a minimum periodicity at which dynamic DRX may be triggered may be expected by configuring LP-WUS MOs in a period that is not a DRX active time and configuring candidate starting points for starting a DRX active time. This may be useful when a DRX cycle is long, such as with eDRX.

The configured MOs may vary depending on whether the UE operates inside or outside the DRX active time. For example, when the UE is currently operating in the DRX active time and the LR is activated and operating, the UE may operate to continuously monitor the LP-WUS without restriction on the configured MOs. This may be for the purpose of receiving a dynamic indication through the LP-WUS. Alternatively, the above operation may be performed only when some timer is started during the DRX active time, for example, when the drx-onDurationTimer is started.

The LP-WUS received in the activated state of the MR may be a wake-up or SSSG switching indication. For example, the UE may receive a wake-up indication by the LP-WUS, and the MR may immediately wake up from micro-sleep to perform PDCCH monitoring. Alternatively, SSSG switching may be indicated by the LP-WUS. While the UE is monitoring a specific SS set (group) with the MR, dynamic SSSG switching may be indicated by the LP-WUS. This may be done to minimize problems caused by miss detection of the LP-WUS, when the UE operates to receive a wake-up indication based entirely on the LP-WUS in the sleep state. Whether to monitor the LP-WUS may vary depending on an SSSG currently monitored by the UE. For example, SSSG switching to SSSG1 including SS sets in dense monitoring periods may be supported by not monitoring the LP-WUS in SSSG1, but monitoring the LP-WUS in SSSG2 including SS sets in sparse monitoring periods.

It may be considered to combine MOs of the LP-WUS with the afore-described payload configuration. For example, when 16 bits are used to identify a UE and the LP-WUS payload may not include all of the 16 bits, it may be considered that only some of the 16 bits are included in the payload and the other bits are identified by MOs. The UE may be identified by a total of 16 bits by including a UE identification of 8 bits in the payload, and configuring the remaining 8 bits as an MO identification (time/frequency resource identification). For this UE identification, a PS-RNTI may be considered in addition to a C-RNTI. Since the PS-RNTI is shared by a plurality of UEs configured with C-DRX and is for UEs aiming for power saving, the UE identification of the LP-WUS may be configured in the same way.

A structure for receiving information exceeding the payload of a single LP-WUS in consecutive MOs may be considered. For example, the LP-WUS payload is transmitted in two consecutive MOs including a UE identification of 8 bits, and the UE may identify a UE identification of final 16 bits by two LP-WUS receptions in the two MOs.

It may be considered that candidate starting points of one DRX active time as proposed above correspond to a plurality of UEs. Therefore, the plurality of UEs may receive the LP-WUS in specific MOs and start the DRX active time at time points after a specific time. These plurality of UEs may be configured as a UE (sub-)group of Proposal 1, and the BS may indicate C-DRX offsets by this UE identification.

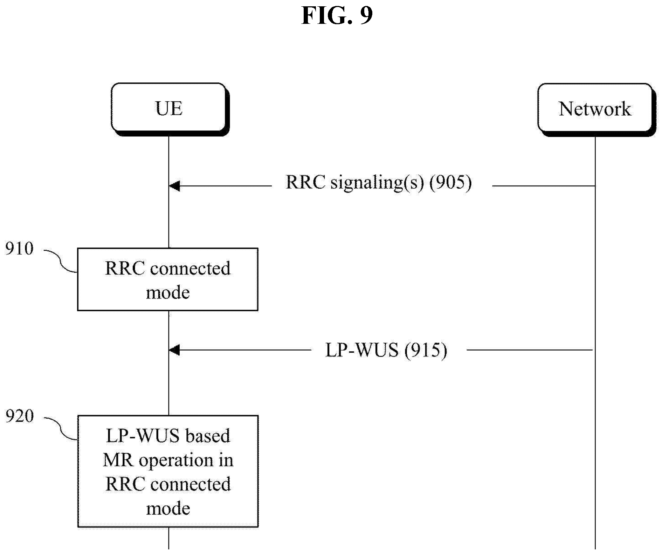

FIG. 9 is a diagram illustrating operations of a UE and a network according to an embodiment. Specifically, FIG. 9 illustrates a UE operation including an MR operation performed according to the assistance of an LP-WUS in RRC connected mode by an RRC connected-mode UE which is configured with a configuration for receiving the LP-WUS and an RRC connected-mode UE operation including the assistance of the LP-WUS.

Referring to FIG. 9, the UE may receive at least one RRC signaling from the network (905). Through the RRC signaling, the UE may be configured with a configuration related to an LP-WUS that may be received in RRC connected mode and a UE operation in the RRC connected mode. The configuration related to the LP-WUS may include payload of the LP-WUS and time/frequency resources, proposed in Proposal 1. Based on these configurations, a UE supporting the Rel-18 LP-WUS may operate according to the rate-matching proposed in Proposal 2.

Subsequently, the UE may transition to the RRC connected mode, for data reception (910). This operation may be transitioning from RRC idle/inactive mode, and also include an operation of waking up from a deep sleep state and receiving data by an MR.

The UE may receive the LP-WUS by using an LR (915). In this case, a BWP in which the LR receives the LP-WUS may be located within a BWP of the MR or configured independently, according to Proposal 1.

The UE may perform its MR operation including an auxiliary operation indicated by the LP-WUS, through the LP-WUS reception (920). The RRC connected-mode UE operation in this case may be an example of the C-DRX-related operation proposed in Proposal 3. Further, an operation such as timer reset related to BWP switching in this case may follow Proposal 4.

Some of the above methods may be selected and applied as a method proposed in the present disclosure. Each method may be performed independently without a separate combination, or one or more methods may be combined and performed in conjunction with each other. Some terms, symbols, and sequences used for description may be replaced by other terms, symbols, and sequences.

Through the present disclosure, the payload of a LP-WUS that a UE may receive and time/frequency resources for transmitting it may be smoothly configured and set. The UE may perform a UE operation in an improved way in connected mode with the assistance of the LP-WUS through the LP-WUS reception.

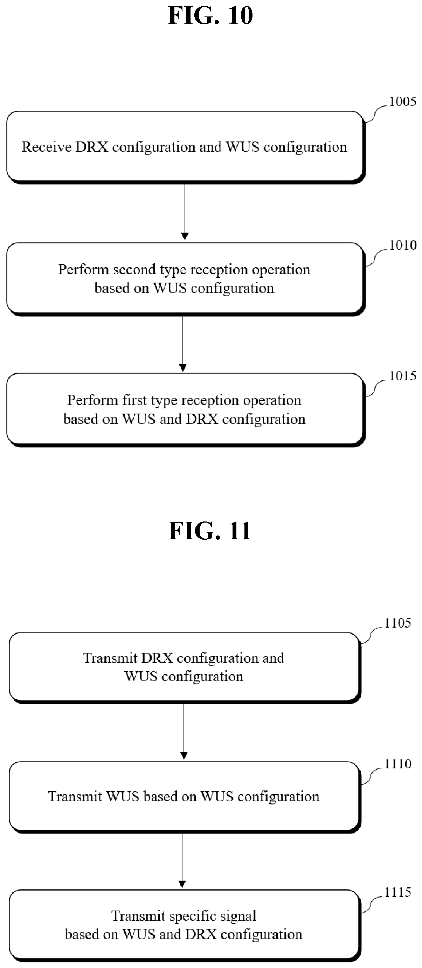

FIG. 10 is a diagram illustrating a UE operation according to an embodiment.

Referring to FIG. 10, the UE may receive, through higher layer signaling, i) a DRX configuration related to a first type reception operation and ii) a WUS configuration related to a second type reception operation performed with lower power than the first type reception operation (1005). The DRX configuration may include information about a plurality of candidate time points (e.g., the candidate starting points of FIG. 8) for starting a DRX active time.

The UE may perform the second type reception operation based on the WUS configuration (1010).

The UE may perform the first type reception operation based on a WUS detected as a result of performing the second type reception operation and the DRX configuration

(1015). The UE may perform the first type reception operation in a first DRX active time starting based on a first candidate time point specified by the detected WUS among the plurality of candidate time points.

The first candidate time point may be located after a specific time gap from a time when the WUS is detected. For example, the specific time gap may be a transition time required to perform the first type reception operation.

The first type reception operation may include PDCCH monitoring.

A search space set in which the PDCCH monitoring is to be performed may be determined or switched based on the WUS.

The first type reception operation may include PDSCH reception. Rate matching for the PDSCH reception may be performed based on resources configured for the second type reception operation.

The second type reception operation may be performed in resources configured UE-commonly.

The WUS may include information about an identifier of the UE.

The WUS configuration may include information about MOs in which the second type reception operation is performed.

The DRX configuration may include information about an interval between the plurality of candidate time points or a periodicity and information about a timer operating during the DRX active time.

The first type reception operation and the second type reception operation may be performed in an RRC connected state.

FIG. 11 is a diagram illustrating an operation of a BS according to an embodiment.

Referring to FIG. 11, the BS may transmit, through higher layer signaling, i) a DRX configuration related to a first type reception operation of a UE and ii) a WUS configuration related to a second type reception operation of the UE performed with lower power than the first type reception operation (1105). The DRX configuration may include information about a plurality of candidate time points (e.g., the candidate starting points of FIG. 8) for starting a DRX active time.

The BS may transmit a WUS related to the second type reception operation of the UE based on the WUS configuration (1110).

The BS may transmit a specific signal related to the first type reception operation of the UE based on the WUS and the DRX configuration (1115). The specific signal related to the first type reception operation may be transmitted in a first DRX active time starting based on a first candidate time point specified by the WUS among the plurality of candidate time points.

The first candidate time point may be located after a specific time gap from a time when the WUS is detected. For example, the specific time gap may be a transition time required to perform the first type reception operation.

The specific signal may include a PDCCH.

A search space set for transmitting the PDCCH may be determined or switched based on the WUS.

The specific signal may include a PDSCH. Rate matching for reception of the PDSCH may be performed based on resources configured for the WUS.

The WUS may be transmitted in resources configured UE-commonly.

The WUS may include information about an identifier of the UE.

The WUS configuration may include information about MOs in which the second type reception operation is performed.

The DRX configuration may include information about an interval between the plurality of candidate time points or a periodicity and information about a timer operating during the DRX active time.

The WUS and the specific signal may be transmitted in an RRC connected state.

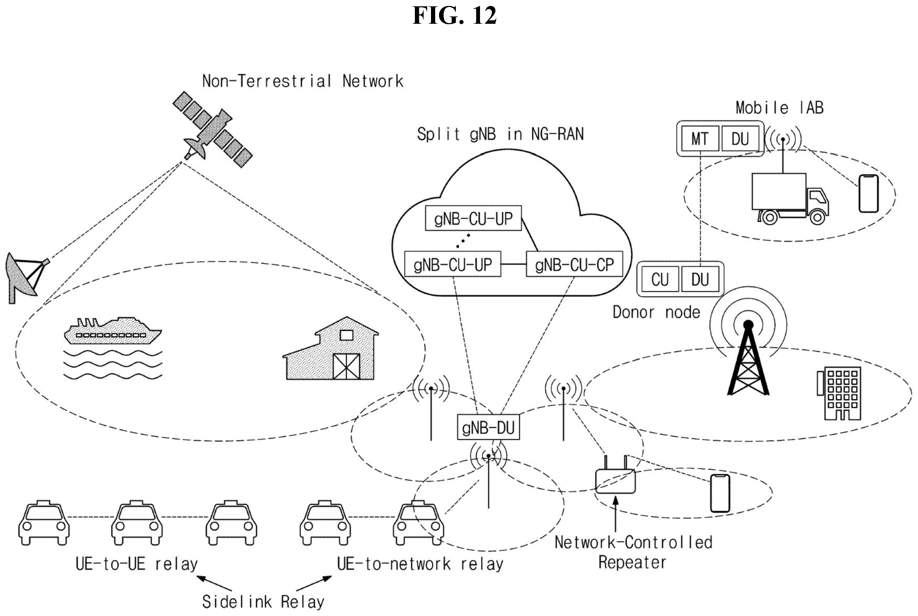

FIG. 12 illustrates a flexible network topology to which some examples of the present disclosure are applicable.

To compensate for incomplete network coverage areas, a network topology configured with a split radio access network (RAN) in a more flexible and resilient manner may be considered. To this end, various nodes such as an IAB node, a relay, and an RF repeater as illustrated in the example of FIG. 12 may be applied, and a non-terrestrial network (NTN) may also be integrated. For example, an IAB node may correspond to a node providing a wireless backhaul. For example, a relay may refer to an intermediate point, and a sidelink relay, which is a relay as which a UE functions, may collectively refer to a UE-to-network (U2N) relay and a UE-to-UE (U2U) relay. For example, an RF repeater may correspond to a node that performs simple signal amplification and forwarding, and a network-controlled repeater may adjust a transmission/-reception configuration based on information provided from a network, in addition to signal amplification and forwarding. For example, an NTN node may correspond to a satellite or aircraft providing NTN coverage, which is difficult for a terrestrial network to provide. In addition to these examples, various intermediate points may be introduced to improve the network topology.

Referring to FIG. 1, a split RAN may support division of a gNB into one centralized unit (CU) and one or more distributed units (DUs). The CU and the DUs may correspond to logical units. The CU may be further divided into a control plane (CP) part and one or more user plane (UP) parts. Since a CP-UP failure affects not only a CU-UP but also a DU, various intermediate points may be introduced to compensate for the failure.

An intermediate point may correspond to a UE or a gNB depending on its relative relationship with other nodes. For example, an IAB node may include a mobile-termination (MT) part and a DU. The MT may connect the IAB node to a donor node. The DU of the IAB node may serve other UEs or connect to another IAB node to provide a multi-hop wireless backhaul to a UE. That is, the IAB node may correspond to a gNB in its relative relationship with a user-side node, and to a UE in its relative relationship with a network-side node.

In some examples of the present disclosure, the description of a UE may apply equally not only to a user-side endpoint but also to an intermediate point that corresponds to a UE in its relative relationship with a network-side endpoint. Similarly, in some examples of the present disclosure, the description of a BS may apply equally not only to a network-side endpoint but also to an intermediate point that corresponds to a BS in its relative relationship with a user-side endpoint. However, in most cases where there is no additional description of operations involving three and more entities, a communication entity in the present disclosure is briefly described using the term UE and/or BS (or first node and/or second node), which is interpreted to include/replace any endpoint or any intermediate point according to its relationship with other nodes.

That is, to simplify the description in some examples of the present disclosure, an operation entity may be referred to as a BS and/or a UE (or a first node and/or a second node). Further, the term BS and/or UE (or first node and/or second node) may be interpreted/replaced as in the following examples: for example, a BS (or first node) and a UE (or second node) may respectively correspond to a first endpoint and a second endpoint; an endpoint and an intermediate point; an intermediate point and an endpoint; or a first intermediate point and a second intermediate point.

In the present disclosure, there may be no intermediate points or one or more intermediate points between a BS and a UE. When an intermediate point exists, it may correspond to an IAB node/relay/RF repeater/NTN node, or a node supporting other functions. The intermediate point may be a fixed node or a mobile (unfixed) node in terms of location.

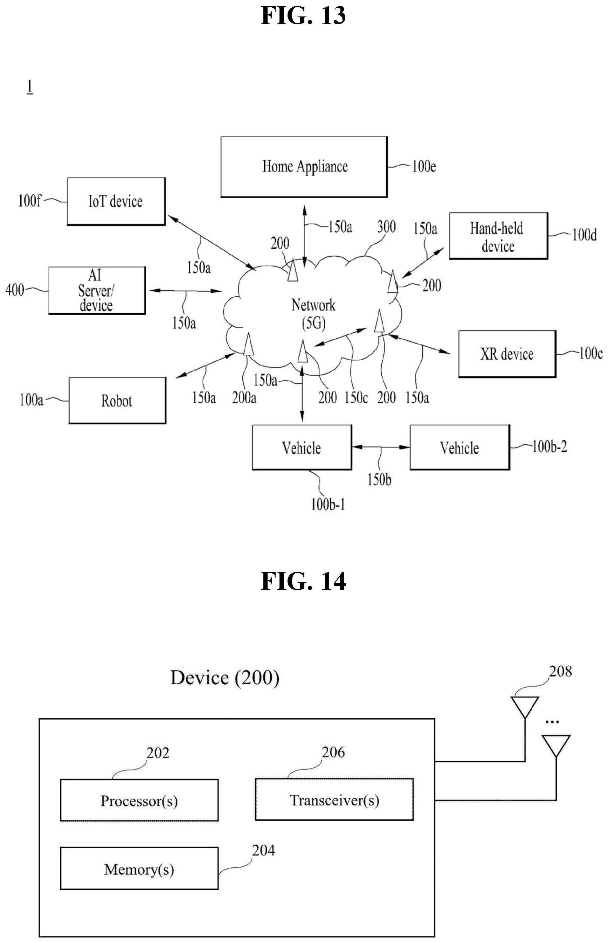

A communication system 1 of FIG. 13 applied to the present disclosure, includes a wireless device, a BS, and a network. A wireless device refers to a device that performs communication using wireless access technologies (e.g., LTE, LTE-A, LTE-A pro, NR, 5G, 5G-A, and 6G), and may be referred to as a communication/wireless/5G device. The wireless device may include, but is not limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 100g. For example, the vehicle may include a vehicle equipped with wireless communication functionality, an autonomous driving vehicle, a vehicle capable of performing inter-vehicle communication, and so on. The vehicles 100b-1 and 100b-2 may include an unmanned aerial vehicle (UAV) (e.g., drone). The XR device 100c includes an augmented reality (AR)virtual reality (VR)/mixed reality (MR) device, and may be implemented in the form of a head mounted device (HMD), a head-up display (HUD) equipped in a vehicle, a television, a smartphone, a computer, a wearable device, a home appliance, a digital signage, a vehicle, or a robot. The hand-held device 100d may include a smartphone, a smart pad, and a wearable device (e.g., a smartwatch, smart glasses, a computer (e.g., a laptop)). The home appliance 100e may include a TV, a refrigerator, a washing machine, and so on. The IoT device 100f may include a sensor, a smart meter, and so on. A wireless device 110 may correspond to a UE (or first node) or an intermediate point. A network device 120 may correspond to a BS (or second node) or another intermediate point. For example, the network device 120 may be implemented as the wireless device 110, and a specific wireless device 120a may operate as the network device 120 for another wireless device 110.

The wireless devices 100a to 100f may be connected to the network 130 via the BS 120. AI technology may be applied to the wireless devices 100a to 100f, and these devices may be connected to an AI server 100g via the network 130. The network 130 may be configured using a 3G, 4G (e.g., LTE), 5G (e.g., NR), or 6G network. The wireless devices 100a to 100f may communicate with each other via the BS 120/network 130, or they may communicate directly (e.g., sidelink communication) without intervention of the BS 120/network 130. For example, the vehicles 100b-1 and 100b-2 may perform direct communication (e.g., vehicle to vehicle (V2V)/vehicle to everything (V2X) communication). Additionally, the IoT device 100f (e.g., a sensor) may communicate directly with another IoT device 100f (e.g., a sensor) or other wireless devices 100a to 100f.

Wireless communication/connections 150a, 150b, and 150c may be established between the wireless devices 100a to 100f and the BS 120, and between BSs 120 themselves. The wireless communication/connections may be achieved through various wireless access technologies such as UL/DL communication 150a, sidelink communication 150b (or D2D communication), and inter-BS communication 150c (e.g., relay and integrated access backhaul (IAB)). Through the wireless communication/connections 150a, 150b, and 150c, wireless devices and BSs/wireless devices, and BSs may transmit/receive wireless signals to each other. For example, the wireless communication/connections 150a, 150b, and 150c may transmit/receive signals through various physical channels. To this end, based on various proposals of the present disclosure, at least some of a process for setting various configuration information for transmitting/receiving wireless signals, various signal processing processes (e.g., channel encoding/decoding, modulation/demodulation, resource mapping/demapping, and so on), and a resource allocation process may be performed.

FIG. 14 illustrates an example of a wireless device applicable to the present disclosure.

Referring to FIG. 3, a wireless device 200 may transmit and receive wireless signals through various wireless access technologies (e.g., LTE, LTE-A, LTE-A pro, NR, 5G, 5G-A, and 6G). The wireless device 200 may include at least one processor 202 and at least one memory 204, and further include at least one transceiver 206 and/or at least one antenna 208.

The processor 202 may be configured to control the memory 204 and/or the transceiver 206, and implement the descriptions, functions, procedures, proposals, methods, and/or flowcharts disclosed in the present disclosure. For example, the processor 202 may process information in the memory 204 to generate first information/signal, and then transmit a wireless signal including the first information/signal through the transceiver 206. Additionally, the processor 202 may receive a wireless signal including second information/signal through the transceiver 206, and then store information obtained by signal processing of the second information/signal in the memory 204. The memory 204 may be connected to the processor 202 and store various pieces of information related to the operation of the processor 202. For example, the memory 204 may store software code including instructions for performing some or all of processes controlled by the processor 202 or for performing the descriptions, functions, procedures, proposals, methods, and/or flowcharts disclosed in the present disclosure. Herein, the processor 202 and the memory 204 may be part of a communication modem/circuit/chip designed to implement wireless communication technology. The transceiver 206 may be connected to the processor 202 and transmit and/or receive wireless signals through the at least one antenna 208. The transceiver 206 may include a transmitter and/or a receiver. The transceiver 206 may be used interchangeably with a radio frequency (RF) unit. In the present disclosure, a wireless device may also refer to a communication modem/circuit/chip.

Hardware elements of the wireless device 200 will be described below in more detail. At least one protocol layer may be implemented by the at least one processor 202, to which the present disclosure is not limited. For example, the at least one processor 202 may implement at least one layer (e.g., functional layers such as physical (PHY), media access control (MAC), radio link control (RLC), packet data convergence protocol (PDCP), radio resource control (RRC), and service data adaptation protocol (SDAP)). The at least one processor 202 may generate at least one Protocol Data Unit (PDU) and/or at least one service data unit (SDU) according to the descriptions, functions, procedures, proposals, methods, and/or flowcharts disclosed in the present disclosure. The att least one processor 202 may generate messages, control information, data, or information according to the descriptions, functions, procedures, proposals, methods, and/or flowcharts disclosed in the present disclosure. The at least one processor 202 may generate a signal (e.g., baseband signal) including a PDU, an SDU, a message, control information, data, or information according to the functions, procedures, proposals, and/or methods disclosed in the present disclosure, and provide it to the at least one transceiver 206. The at least one processor 202 may receive a signal (e.g., baseband signal) from the at least one transceiver 206 and obtain a PDU, an SDU, a message, control information, data, or information according to the descriptions, functions, procedures, proposals, methods, and/or flowcharts disclosed in the present disclosure.

The at least one processor 202 may be referred to as a controller, microcontroller, microprocessor, or microcomputer. The at least one processor 202 may be implemented by hardware, firmware, software, or a combination thereof. In an example, at least one application specific integrated circuit (ASIC), at least one digital signal processor (DSP), at least one digital signal processing device (DSPD), at least one programmable logic device (PLD), or at least one field programmable gate array (FPGA) may be included in the at least one processor 202. The descriptions, functions, procedures, proposals, methods, and/or flowcharts disclosed in the present disclosure may be implemented using firmware or software, and the firmware or software may be implemented to include a module, a procedure, a function, and so on. The firmware or software configured to perform the descriptions, functions, procedures, proposals, methods, and/or flowcharts disclosed in the present disclosure may be included in the at least one processor 202 or stored in the at least one memory 204 and driven by the at least one processor 202. The descriptions, functions, procedures, proposals, methods, and/or flowcharts disclosed in the present disclosure may be implemented using firmware or software in the form of code, an instruction, and/or a set of instructions.

The at least one memory 204 may be connected to the at least one processor 202 and store various types of data, signals, messages, information, programs, code, instructions, and/or commands. The at least one memory 204 may include read only memory (ROM), random access memory (RAM), erasable programmable read only memory (EPROM), flash memory, a hard drive, a register, a cache memory, a computer-readable storage medium, and/or a combination thereof. The at least one memory 204 may be located inside and/or outside the at least one processor 202. Additionally, the at least one memory 204 may be connected to the at least one processor 202 through various technologies such as wired or wireless connections.

The at least one transceiver 206 may transmit user data, control information, a wireless signal/channel, and so on mentioned in the methods and/or flowcharts of the present disclosure to at least one other device. The at least one transceiver 206 may receive user data, control information, a wireless signal/channel, and so on mentioned in the descriptions, functions, procedures, proposals, methods, and/or flowcharts disclosed in the present disclosure from at least one other device. For example, the at least one transceiver 206 may be connected to the at least one processor 202 and transmit and receive wireless signals. For example, the at least one processor 202 may control the at least one transceiver 206 to transmit user data, control information, or a wireless signal to at least one other device. Additionally, the at least one processor 202 may control the at least one transceiver 206 to receive user data, control information, or a wireless signal from at least one other device. Further, the at least one transceiver 206 may be connected to the at least one antenna 208, and configured to transmit and receive user data, control information, a wireless signal/channel, and so on mentioned in the descriptions, functions, procedures, proposals, methods, and/or flowcharts disclosed in the present disclosure through the at least one antenna 208. In the present disclosure, at least one antenna may be a plurality of

EP 4 761 377 A1

physical antennas or a plurality of logical antennas (e.g., antenna ports). The at least one transceiver 206 may convert a received wireless signal/channel from an RF band signal to a baseband signal to process the received user data, control information, wireless signal/channel, and so on, using the at least one processor 202. The at least one transceiver 206 may convert user data, control information, a wireless signal/channel, and so on processed using the at least one processor 202 from a baseband signal to an RF band signal. To this end, the at least one transceiver 206 may include an (analog) oscillator and/or filter.

The components of the wireless device described with reference to FIG. 14 may be referred to by different terms from a functional perspective. For example, the processor 202 may be referred to as a controller, the transceiver 206 as a communication unit, and the memory 204 as a storage unit. In some cases, the communication unit may be used to mean including at least part of the processor 202 and the transceiver 206.

The structure of the wireless device described with reference to FIG. 14 may be understood as the structure of at least part of various devices. For example, the structure of the wireless device illustrated in FIG. 14 may be at least part of the various devices described with reference to FIG. 13 (e.g., the robot 100a, the vehicles 100b-1 and 100b-2, the XR device 100c, the hand-held device 100d, the home appliance 100e, the IoT device 100f, and the AI device/server 100g). Further, according to various embodiments, the device may further include other components in addition to the components illustrated in FIG. 3.

For example, the device may be a portable device such as a smartphone, smart pad, wearable device (e.g., smartwatch and smart glasses), or portable computer (e.g., laptop). In this case, the device may further include at least one of a power supply unit that supplies power and includes a wired/wireless charging circuit, a battery, and so on, an interface unit that includes at least one port (e.g., audio input/output port and video input/output port) for connection to other devices, and an input/output unit for inputting and outputting video information/signals, audio information/signals, data, and/or information input from a user.

For example, the device may be a mobile device such as a mobile robot, vehicle, train, unmanned aerial vehicle (UAV), vessel, and so on. In this case, the device may further include at least one of a driving unit that includes at least one of an engine, motor, powertrain, wheel, brake, or steering system of the device, a power supply unit that supplies power and includes a wired/wireless charging circuit, a battery, and so on, a sensor unit that senses status information, environmental information, and user information of the device or its surroundings, an autonomous driving unit that performs functions such as path maintenance, speed control, and destination setting, and a positioning unit that obtains mobile object position information through the global positioning system (GPS) and various sensors.

For example, the device may be an XR device such as an HMD, a head-up display (HUD) equipped in a vehicle, a television, a smartphone, a computer, a wearable device, a home appliance, digital signage, a vehicle, or a robot. In this case, the device may further include at least one of a power supply unit that supplies power and includes a wired/wireless charging circuit, a battery, and so on, an input/output unit that obtains control information, data, and so on from an external source and outputs a generated XR object, and a sensor unit that senses status information, environmental information, and user information of the device or its surroundings.

For example, the device may be a robot categorized as industrial, medical, home, military, and so on, depending on its purpose or field of use. In this case, the device may further include at least one of a sensor unit that senses status information, environmental information, and user information of the device or its surroundings, and a driving unit that performs various physical actions such as moving robot joints.

For example, the device may be an AI device such as a TV, projector, smartphone, PC, laptop, digital broadcasting terminal, tablet PC, wearable device, set-top box (STB), radio, washing machine, refrigerator, digital signage, robot, or vehicle. In this case, the device may further include at least one of an input unit that obtains various types of data from an external source, an output unit that generates an output related to vision, hearing, or touch, a sensor unit that senses status information, environmental information, and user information of the device or its surroundings, and a training unit that trains a model including an artificial neural network using training data.

The structure of the wireless device illustrated in FIG. 14 may be understood as part of a Radio Access Network (RAN) node (e.g., BS, DU, RU, RR, and so on). That is, the device illustrated in FIG. VI may be a RAN node. In this case, the device may further include a wired transceiver for front haul and/or back haul communication. However, when front haul and/or back haul communication is based on wireless communication, the at least one transceiver 206 illustrated in FIG. 14 may be used for front haul and/or back haul communication, and a wired transceiver may not be included.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

The present disclosure is applicable to UEs, BSs, or other apparatuses in a wireless mobile communication system.

**Claims**

1. A method for receiving a signal by a user equipment (UE) in a wireless communication system, the method comprising:

   receiving, through higher layer signaling, i) a discontinuous reception (DRX) configuration related to a first type reception operation and ii) a wake-up signal (WUS) configuration related to a second type reception operation performed with lower power than the first type reception operation;
   performing the second type reception operation based on the WUS configuration; and
   performing the first type reception operation based on a WUS detected as a result of performing the second type reception operation and the DRX configuration,
   wherein the DRX configuration includes information about a plurality of candidate time points for starting a DRX active time, and
   wherein the UE performs the first type reception operation in a first DRX active time starting based on a first candidate time point specified by the detected WUS among the plurality of candidate time points.

2. The method of claim 1, wherein the first candidate time point is located after a specific time gap from a time when the WUS is detected.

3. The method of claim 2, wherein the specific time gap is a transition time required to perform the first type reception operation.

4. The method of claim 1, wherein the first type reception operation includes physical downlink control channel (PDCCH) monitoring, and
   wherein a search space set in which the PDCCH monitoring is to be performed is determined or switched based on the WUS.

5. The method of claim 1, wherein the first type reception operation includes physical downlink shared channel (PDSCH) reception, and
   wherein rate matching for the PDSCH reception is performed based on resources configured for the second type reception operation.

6. The method of claim 1, wherein the second type reception operation is performed in resources configured UE-commonly, and
   wherein the WUS includes information about an identifier of the UE.

7. The method of claim 1, wherein the WUS configuration includes information about monitoring occasions (MOs) in which the second type reception operation is performed.

8. The method of claim 1, wherein the DRX configuration includes information about an interval between the plurality of candidate time points or a periodicity and information about a timer operating during the DRX active time.

9. The method of claim 1, wherein the first type reception operation and the second type reception operation are performed in a radio resource control (RRC) connected state.

10. A non-transitory computer-readable recording medium recording a program for performing the method of claim 1.

11. An apparatus for wireless communication, the apparatus comprising:

a memory configured to store instructions; and
a processor configured to perform operations by executing the instructions,
wherein the operations of the processor include:

receiving, through higher layer signaling, i) a discontinuous reception (DRX) configuration related to a first type reception operation and ii) a wake-up signal (WUS) configuration related to a second type reception operation performed with lower power than the first type reception operation;
performing the second type reception operation based on the WUS configuration; and
performing the first type reception operation based on a WUS detected as a result of performing the second type reception operation and the DRX configuration,
wherein the DRX configuration includes information about a plurality of candidate time points for starting a DRX active time, and
wherein the first type reception operation is performed in a first DRX active time starting based on a first candidate time point specified by the detected WUS among the plurality of candidate time points.

12. The apparatus of claim 11, further comprising:

a first receiver configured for the first type reception operation; and
a second receiver configured for the second type reception operation,
wherein the second receiver consumes less power than the first receiver.

13. The apparatus of claim 11, wherein the apparatus is a user equipment (UE) operating in a wireless communication system or a processing device controlling the UE.

14. A method for transmitting a signal by a base station (BS) in a wireless communication system, the method comprising:

transmitting, through higher layer signaling, i) a discontinuous reception (DRX) configuration related to a first type reception operation of a user equipment (UE) and ii) a wake-up signal (WUS) configuration related to a second type reception operation of the UE performed with lower power than the first type reception operation;
transmitting a WUS related to the second type reception operation of the UE based on the WUS configuration; and
transmitting a specific signal related to the first type reception operation of the UE based on the WUS and the DRX configuration,
wherein the DRX configuration includes information about a plurality of candidate time points for starting a DRX active time, and
wherein the specific signal related to the first type reception operation is transmitted in a first DRX active time starting based on a first candidate time point specified by the WUS among the plurality of candidate time points.

15. A base station (BS) for wireless communication, the BS comprising:

a memory configured to store instructions; and
a processor configured to perform operations by executing the instructions,
wherein the operations of the processor include:

transmitting, through higher layer signaling, i) a discontinuous reception (DRX) configuration related to a first type reception operation of a user equipment (UE) and ii) a wake-up signal (WUS) configuration related to a second type reception operation of the UE performed with lower power than the first type reception operation;
transmitting a WUS related to the second type reception operation of the UE based on the WUS configuration; and
transmitting a specific signal related to the first type reception operation of the UE based on the WUS and the DRX configuration,
wherein the DRX configuration includes information about a plurality of candidate time points for starting a DRX active time, and
wherein the specific signal related to the first type reception operation is transmitted in a first DRX active time starting based on a first candidate time point specified by the WUS among the plurality of candidate time

points.

# FIG. 1

Initial Cell Search | System Information Reception | Random Access Procedure | General DL/UL Tx/Rx

PSS/SSS & [DLRS] & PBCH — S101

PDCCH/ PDSCH (BCCH) — S102

PRACH — S103  PDCCH/ PDSCH — S104  PRACH — S105  PDCCH/ PDSCH — S106

S108

PDCCH/ PDSCH — S107  PUSCH/ PUCCH

• DL/UL ACK/NACK
• UE CQI/PMI/Rank Report using PUSCH and PUCCH

# FIG. 2

DL assingment-to-PDSCH offset (K0)

PDCCH

slot

PDSCH

PUCCH

PDSCH-to-HARQ-ACK reporting offset (K1)

# FIG. 3

UL grant-to-PUSCH offset (K2)

PDCCH

PUSCH

# FIG. 4

UE shall monitor PDCCH →

On Duration

Opportunity for DRX

DRX Cycle

# FIG. 5

ON duration (wake-up mode)

PO

PO

Sleep mode

DRX cycle

power

time

# FIG. 6

eDRX cycle

PTW

Power saving mode

PTW

DRX cycle | ... | DRX cycle | ... | DRX cycle | DRX cycle

power

time

# FIG. 7

# FIG. 8

# FIG. 9

# FIG. 10

Receive DRX configuration and WUS configuration — 1005

Perform second type reception operation based on WUS configuration — 1010

Perform first type reception operation based on WUS and DRX configuration — 1015

# FIG. 11

Transmit DRX configuration and WUS configuration — 1105

Transmit WUS based on WUS configuration — 1110

Transmit specific signal based on WUS and DRX configuration — 1115

# FIG. 12

Non-Terrestrial Network

Split gNB in NG-RAN

Mobile IAB

MT DU

gNB-CU-UP

gNB-CU-UP — gNB-CU-CP

CU DU

Donor node

gNB-DU

UE-to-UE relay

UE-to-network relay

Network-Controlled Repeater

Sidelink Relay

EP 4 761 377 A1

# FIG. 13

1

# FIG. 14

Device (200)

# EP 4 761 377 A1

<table>
<tr><td colspan="2">**INTERNATIONAL SEARCH REPORT**</td><td>International application No.<br>**PCT/KR2024/011849**</td></tr>
</table>

| A. | CLASSIFICATION OF SUBJECT MATTER |
|---|---|

**H04W 52/02**(2009.01)i; **H04W 76/28**(2018.01)i; **H04W 72/0457**(2023.01)i; **H04W 72/232**(2023.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04W 52/02(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상위 계층 시그널링(higher layer signaling), DRX 설정(configuration), WUS 설정 (configuration), DRX 활성 시간(active time)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0074823 A (GUANGDONG OPPO MOBILE TELECOMMUNICATIONS CORP., LTD.) 03 June 2022 (2022-06-03)<br>See paragraphs [0024]-[0025], [0075], [0096] and [0109]-[0118]; claim 8; and figures 3 and 5. | 1-4,7-15 |
| Y | | 5-6 |
| Y | US 2022-0232477 A1 (QUALCOMM INCORPORATED) 21 July 2022 (2022-07-21)<br>See paragraphs [0075], [0079] and [0089]; and figures 2B, 3 and 4A. | 5-6 |
| A | WO 2022-154972 A1 (QUALCOMM INCORPORATED) 21 July 2022 (2022-07-21)<br>See paragraphs [0119]-[0121]; and figure 15. | 1-15 |
| A | US 2020-0389933 A1 (QUALCOMM INCORPORATED) 10 December 2020 (2020-12-10)<br>See paragraphs [0102]-[0108]; and figure 8. | 1-15 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 November 2024** | **21 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/011849**

| C. | DOCUMENTS CONSIDERED TO BE RELEVANT | |
|---|---|---|
| Category* | Citation of document, with indication, where appropriate, of the relevant passages | Relevant to claim No. |
| A | US 2022-0353820 A1 (GUANGDONG OPPO MOBILE TELECOMMUNICATIONS CORP., LTD.) 03 November 2022 (2022-11-03)<br>See paragraphs [0046]-[0051]; and figure 3. | 1-15 |

Form PCT/ISA/210 (second sheet) (July 2022)

## INTERNATIONAL SEARCH REPORT
### Information on patent family members

| | International application No. |
|---|---|
| | **PCT/KR2024/011849** |

| Patent document cited in search report | | | Publication date (day/month/year) | Patent family member(s) | | | Publication date (day/month/year) |
|---|---|---|---|---|---|---|---|
| KR | 10-2022-0074823 | A | 03 June 2022 | CN | 113508566 | A | 15 October 2021 |
| | | | | CN | 113905429 | A | 07 January 2022 |
| | | | | CN | 113905429 | B | 24 November 2023 |
| | | | | DK | 3937441 | T3 | 11 September 2023 |
| | | | | EP | 3937441 | A1 | 12 January 2022 |
| | | | | EP | 3937441 | A4 | 11 May 2022 |
| | | | | EP | 3937441 | B1 | 05 July 2023 |
| | | | | ES | 2955191 | T3 | 29 November 2023 |
| | | | | JP | 2022-552582 | A | 19 December 2022 |
| | | | | JP | 7326495 | B2 | 15 August 2023 |
| | | | | US | 12022394 | B2 | 25 June 2024 |
| | | | | US | 2022-0039014 | A1 | 03 February 2022 |
| | | | | WO | 2021-056546 | A1 | 01 April 2021 |
| US | 2022-0232477 | A1 | 21 July 2022 | CN | 116686347 | A | 01 September 2023 |
| | | | | EP | 4278710 | A1 | 22 November 2023 |
| | | | | WO | 2022-154972 | A1 | 21 July 2022 |
| WO | 2022-154972 | A1 | 21 July 2022 | CN | 116686347 | A | 01 September 2023 |
| | | | | EP | 4278710 | A1 | 22 November 2023 |
| | | | | US | 2022-0232477 | A1 | 21 July 2022 |
| US | 2020-0389933 | A1 | 10 December 2020 | CN | 113906824 | A | 07 January 2022 |
| | | | | CN | 113906824 | B | 21 June 2024 |
| | | | | EP | 3981220 | A1 | 13 April 2022 |
| | | | | EP | 3981220 | B1 | 13 December 2023 |
| | | | | EP | 4287760 | A1 | 06 December 2023 |
| | | | | US | 11452165 | B2 | 20 September 2022 |
| | | | | US | 12004255 | B2 | 04 June 2024 |
| | | | | US | 2023-0007731 | A1 | 05 January 2023 |
| | | | | WO | 2020-247744 | A1 | 10 December 2020 |
| US | 2022-0353820 | A1 | 03 November 2022 | AU | 2018-454465 | A1 | 24 June 2021 |
| | | | | BR | 112021011863 | A2 | 31 August 2021 |
| | | | | CA | 3122869 | A1 | 25 June 2020 |
| | | | | CN | 112673679 | A | 16 April 2021 |
| | | | | CN | 113179548 | A | 27 July 2021 |
| | | | | CN | 113179548 | B | 14 April 2023 |
| | | | | EP | 3879887 | A1 | 15 September 2021 |
| | | | | EP | 3879887 | A4 | 08 December 2021 |
| | | | | JP | 2022-514841 | A | 16 February 2022 |
| | | | | JP | 2023-113863 | A | 16 August 2023 |
| | | | | JP | 7295241 | B2 | 20 June 2023 |
| | | | | KR | 10-2021-0089241 | A | 15 July 2021 |
| | | | | KR | 10-2567738 | B1 | 17 August 2023 |
| | | | | SG | 11202106272 | VA | 29 July 2021 |
| | | | | US | 11412452 | B2 | 09 August 2022 |
| | | | | US | 11589311 | B2 | 21 February 2023 |
| | | | | US | 11632722 | B2 | 18 April 2023 |
| | | | | US | 11665646 | B2 | 30 May 2023 |
| | | | | US | 11706715 | B2 | 18 July 2023 |
| | | | | US | 2021-0297954 | A1 | 23 September 2021 |
| | | | | WO | 2020-124548 | A1 | 25 June 2020 |

Form PCT/ISA/210 (patent family annex) (July 2022)